# EUROPÄISCHE PATENTSCHRIFT

(11) **EP 4 466 623 B1**
(45) Veröffentlichungstag und Bekanntmachung des Hinweises auf die Patenterteilung: **29.04.2026**
(21) Anmeldenummer: 23707005.7
(22) Anmeldetag: 13.02.2023
(51) Int. Cl.: G06F 21/57, H04L 9/40, G06F 21/56

(54) **VERFAHREN UND EIN SYSTEM ZUR DURCHFÜHRUNG EINES IT-SICHERHEITSTESTS**
METHOD AND SYSTEM FOR PERFORMING AN IT SECURITY TEST
PROCÉDÉ ET SYSTÈME DE RÉALISATION D'UN ESSAI DE SÉCURITÉ INFORMATIQUE

(30) Priorität: 28.02.2022 DE 102022202020; 19.04.2022 EP 22168793
(43) Veröffentlichungstag der Anmeldung: 27.11.2024
(73) Patentinhaber: Siemens Aktiengesellschaft, 80333 München (DE)
(72) Erfinder: LUKAS, Klaus, 81739 München (DE); PRÖLL, Thomas, 81737 München (DE); RIEDMÜLLER, Reinhard, 81735 München (DE)
(74) Vertreter: Siemens Patent Attorneys
(86) Internationale Anmeldenummer: PCT/EP2023/053458
(87) Internationale Veröffentlichungsnummer: WO 2023/161054

(56) Entgegenhaltungen:
- US-A1- 2019 141 074
- US-A1- 2019 258 805
- US-A1- 2020 103 894

## Beschreibung

Die Erfindung betrifft ein Verfahren und ein System zur Durchführung eines IT-Sicherheitstests.

Aus US 2019/258805 A1 und US 2020/103894 A1 sind Verfahren und Systeme für Datensammlungen in industriellen Umgebungen bekannt. US 2019141074 offenbart IT-Sicherheitstests.

Es ist bekannt, Geräte mittels Testplattformen IT-Sicherheitstests zu unterziehen. Regelmäßig werden die Geräte dazu mittels einer Datenverbindung mit einer Testplattform zur Durchführung des IT-Sicherheitstests verbunden. Während das Gerät im Regelfall über die Datenverbindung ansprechbar bleibt, kann es in jedoch bestimmten Fällen passieren, dass das Gerät nicht mehr ansprechbar ist und nicht in gewohnter Weise reagiert. In diesen Fällen können IT-Sicherheitstests eine geringere Zuverlässigkeit aufweisen.

Es ist daher Aufgabe der Erfindung, ein Verfahren zur Durchführung eines IT-Sicherheitstests anzugeben, mittels welchem IT-Sicherheitstests von Geräten verbessert, insbesondere zuverlässiger, durchgeführt werden können. Ferner ist es Aufgabe der Erfindung, ein System zur Durchführung eines IT-Sicherheitstests anzugeben, mittels welchem das verbesserte Verfahren zur Durchführung eines IT-Sicherheitstests durchführbar ist.

Diese Aufgabe der Erfindung wird mit einem Verfahren zur Durchführung eines IT-Sicherheitstests mit den in Anspruch 1 angegebenen Merkmalen sowie mit einem System zur Durchführung eines IT-Sicherheitstests mit den in Anspruch 6 angegebenen Merkmalen und mit einer Fertigungsanlage und/oder Wartungsanlage und/oder Logistikanlage mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Durchführung eines IT-Sicherheitstests eines Geräts mittels einer Datenverbindung, insbesondere einer Netzwerkverbindung, wird der IT-Sicherheitstest des Geräts durchgeführt und es wird bei der Durchführung des IT-Sicherheitstests ein Datenfeedback des Geräts mittels der Datenverbindung erfasst und es wird ein Gerätezustand des Geräts zusätzlich optisch und/oder akustisch erfasst und es wird das Datenfeedback unter Berücksichtigung des erfassten Gerätezustand ausgewertet. Mittels der optischen und/oder akustischen Erfassung des Gerätezustands des Geräts stehen zusätzlich zur Datenverbindung optische und/oder akustisch erfasste Informationen über den Gerätezustand zur Verfügung, sodass in solchen Fällen, in welchen Datenfeedback ausbleibt oder Datenfeedback anders auftritt als erwartet, der Gerätezustand herangezogen werden kann. Mittels des zusätzlich herangezogenen Gerätezustands kann auch bei einem ausbleibenden Datenfeedback geschlossen werden, ob das Gerät nach wie vor einsatzbereit ist oder ob sich das Gerät in einem gestörten Funktionszustand befindet. Wenn sich das Gerät während des IT-Sicherheitstests in einem gestörten Funktionszustand befindet, kann die Information über das Vorliegen des gestörten Funktionszustands des Geräts in den IT-Sicherheitstest als zusätzliches Testergebnis des IT-Sicherheitstests in die Auswertung es IT-Sicherheitstests eingehen.

Bei dem erfindungsgemäßen Verfahren wird vorzugsweise optisch und/oder akustisch mittels mindestens eines Erfassungsmittels, insbesondere mittels mindestens einer Kamera und/oder mittels mindestens eines Mikrofons, erfasst. Besonders bevorzugt werden mittels des Erfassungsmittels eine oder mehrere Benutzerschnittstellen des Geräts erfasst. So kann mittels einer Erfassung der Benutzerschnittstellen des Geräts leicht auf den Gerätezustand des Geräts zurückgeschlossen werden. Vorzugsweise können bei dem erfindungsgemäßen Verfahren eine graphische Benutzeroberfläche oder akustische Signale für Benutzer erfasst werden. So können mittels graphischer Benutzeroberflächen Mitteilungen, insbesondere Warnsignale oder Warnmeldungen oder Alarmmeldungen dargestellt werden, welche mittels der Erfassungsmittel leicht erfasst werden können. Auch können akustische Warnsignale oder Warnmeldungen, etwa Alarmtöne wie insbesondere Alarmsummer, leicht erfasst werden. Solche graphischen oder akustischen Warnsignale erlauben einen zuverlässigen Rückschluss auf einen nicht vorgesehenen Gerätezustand des Geräts.

Bei dem erfindungsgemäßen Verfahren umfasst das Datenfeedback Feedbackdaten und/oder die Information, ob Feedbackdaten erhalten werden oder ob keine oder weniger Feedbackdaten erhalten werden als erwartet. So kann ein Datenfeedback einerseits Feedbackdaten des Geräts umfassen, die das Gerät als Antwort auf Eingangsdaten des Geräts bildende Testdaten ausgibt. Zudem kann ein Datenfeedback auch das Ausbleiben von Feedbackdaten bedeuten, insbesondere in solchen Situationen, in welchen Feedbackdaten erwartet werden. Auch in solchen Situationen kann das Ausbleiben von Feedbackdaten eine Feedbackinformation des Geräts umfassen.

Bei dem erfindungsgemäßen Verfahren wird der erfasste Gerätezustand bevorzugt herangezogen, eine Sicherheitsinformation aus dem Datenfeedback in Abhängigkeit des Gerätezustands abzuleiten. Aus der Kombination des Gerätezustands mit dem Datenfeedback lässt sich eine Sicherheitsinformation wesentlich zuverlässiger gewinnen als aus dem Datenfeedback allein. Insbesondere kann ein Gerätezustand mit einem zeitgleich oder zeitlich vorhergehenden Datenfeedback in Beziehung gesetzt werden und so ein Einfluss oder eine Korrelation des Datenfeedbacks mit dem Gerätezustand berücksichtigt werden.

Bei dem Verfahren gemäß der Erfindung wird zweckmäßig der erfasste Gerätezustand herangezogen, das Gerät in Abhängigkeit des Gerätezustands zu bedienen, insbesondere das Gerät zurückzusetzen. Wird anhand des erfassten Gerätezustands auf einen gestörten Gerätezustand des Geräts geschlossen, so kann mittels dieser Weiterbildung des erfindungsgemäßen Verfahrens das Gerät zurückgesetzt werden. Zweckmäßig wird dazu ein Aktor herangezogen, welcher einen Rücksetzvorgang initiiert, insbesondere mittels einer Bedienung einer Rücksetztaste oder mittels eines Rücksetzfeldes eines Touchscreens oder mittels einer Unterbrechung einer elektrischen Versorgung oder mittels einer Verursachung eines elektrischen Kurzschlusses.

Vorzugsweise wird in einer bevorzugten Weiterbildung des erfindungsgemäßen Verfahrens der erfasste Gerätezustand herangezogen, um das Gerät in einen sicheren Betriebsmodus zu versetzen und/oder einer Softwareaktualisierung zu unterziehen und/oder außer Betrieb zu nehmen und/oder auszuschalten oder in einen Ruhezustand zu versetzen.

Geeigneterweise wird bei dem erfindungsgemäßen Verfahren der Gerätezustand erfasst, indem ein akustisches Signal des Geräts, insbesondere ein Alarmsignal des Geräts und/oder ein optisches Signal des Geräts, insbesondere eine Anzeige des Geräts, erfasst wird. Vorteilhaft können optische Signale und/oder akustische Signale zur Erfassung des Gerätezustands in einer leicht zu klassifizierenden Weise herangezogen und mit einem Gerätezustand in Beziehung gesetzt werden.

Besonders bevorzugt bildet oder umfasst der Gerätezustand einen Fehlerzustand des Geräts, wobei der Gerätezustand anhand einer Fehlermeldung, insbesondere eines optischen Benachrichtigungssignals, vorzugsweise eines Benachrichtigungsfensters, und/oder eines akustischen Signals, des Geräts und/oder eines Betriebssystems des Geräts und/oder einer Software des Geräts, erfasst wird.

Das erfindungsgemäße System zur Durchführung eines IT-Sicherheitstests eines Geräts zur Durchführung eines Verfahrens wie oben beschrieben weist eine Kommunikationsschnittstelle für eine Datenverbindung mit dem Gerät auf und weist eine Testeinrichtung zur Durchführung des IT-Sicherheitstests, welche ausgebildet ist, ein Datenfeedback des Geräts zu erfassen, auf und weist mindestens ein Erfassungsmittel zur optischen und/oder akustischen Erfassung des Gerätezustands und eine Auswerteinrichtung, die ausgebildet ist, das Datenfeedback unter Berücksichtigung des erfassten Gerätezustands auszuwerten, auf. Das erfindungsgemäße System ist zur Ausführung eines erfindungsgemäßen Verfahrens wie oben beschrieben ausgebildet und weist in entsprechender Weise die bereits zum erfindungsgemäßen Verfahren erläuterten Vorteile auf.

Das erfindungsgemäße System ist zur Durchführung eines IT-Sicherheitstests eines Geräts mit einer graphischen und/oder optischen und/oder akustischen Benutzerschnittstelle ausgebildet, wobei das mindestens eine Erfassungsmittel zur Erfassung der Benutzerschnittstelle ausgebildet ist. Insbesondere optische und/oder akustische Benutzerschnittstellen sind leicht mit zur optischen oder akustischen Erfassung ausgebildeten Erfassungsmitteln erfassbar.

Bei dem erfindungsgemäßen System weist das mindestens eine Erfassungsmittel mindestens eine Kamera und/oder mindestens ein Mikrofon auf.

Das erfindungsgemäße System weist mindestens einen Aktor, ausgebildet zur Bedienung des Geräts in Abhängigkeit des Gerätezustands, auf. Vorzugsweise ist ein solcher Aktor zur Bedienung einer Rücksetztaste oder eines Rücksetzfelds auf einem Touchscreen ausgebildet.

Das erfindungsgemäße System ist zur Durchführung eines IT-Sicherheitstests eines Geräts mit mindestens einer Benutzerschnittstelle ausgebildet, wobei der Aktor eingerichtet ist, die mindestens eine Benutzerschnittstelle des Geräts zu bedienen.

Die erfindungsgemäße Fertigungsanlage und/oder Wartungsanlage und/oder Logistikanlage weist ein erfindungsgemäßes System wie vorhergehend beschrieben auf. Zweckmäßig umfasst die erfindungsgemäße Fertigungsanlage und/oder Wartungsanlage und/oder Logistikanlage zudem das Gerät, welches vorzugsweise ein Steuergerät und/oder ein Fertigungsgerät und/oder ein Wartungsgerät und/oder ein Logistikgerät, zweckmäßig ein Fertigungswerkzeug und/oder Fertigungsroboter und/oder ein Wartungswerkzeug und/oder ein Wartungsroboter und/oder ein Logistikwerkzeug und/oder ein Logistikroboter und/oder Logistikfahrzeug ist.

Zweckmäßig ist das erfindungsgemäße Verfahren oder sind zumindest Teile des erfindungsgemäßen Verfahrens computerimplementiert.

Nachfolgend wird die Erfindung anhand eines in der Zeichnung dargestellten Ausführungsbeispiels näher erläutert. Die einzige Zeichnungsfigur 1 zeigt einen Ablauf eines erfindungsgemäßen Verfahrens zum Durchführen eines IT-Sicherheitstests eines Geräts, schematisch in einem Ablaufdiagramm.

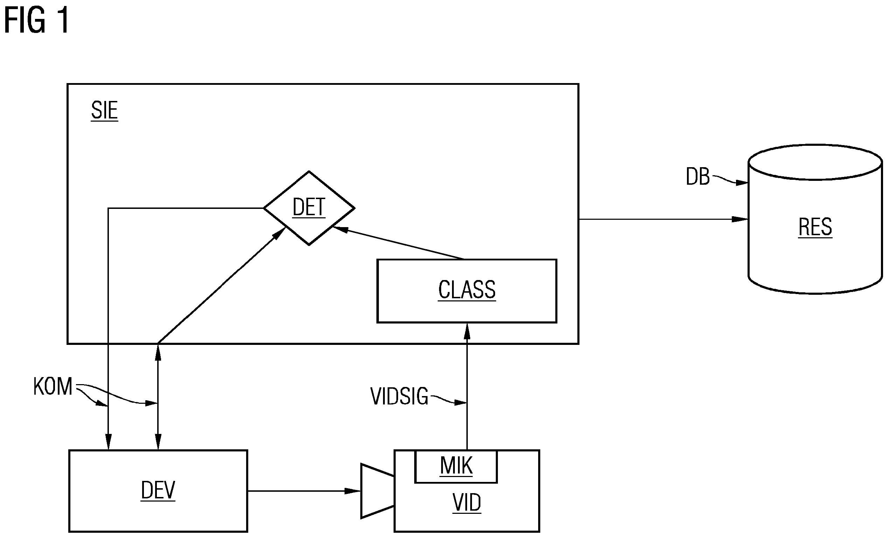

Das in Fig. 1 dargestellte Ablaufdiagramm zeigt einen Ablauf eines IT-Sicherheitstests eines Geräts DEV in Gestalt eines Fertigungsgeräts, etwa eines programmiergesteuerten Fräsers, einer mittels eines IoT-Netzwerks vernetzten Fertigungsanlage MAN. Alternativ kann das Gerät auch ein Logistikgerät, etwa ein mobiler Lagerroboter, einer mittels eines IoT-Netzwerks vernetzten Logistikanlage oder ein Wartungsgerät, etwa ein Wartungsroboter, einer mittels eines IoT-Netzwerks vernetzten Wartungsanlage sein.

Das Gerät DEV weist zum einen eine Kommunikationsschnittstelle KOM zur Datenverbindung auf, mittels welcher das Gerät DEV programmiergesteuert werden kann.

Das Gerät DEV weist zusätzlich eine Benutzerschnittstelle USE auf, mittels welcher ein Benutzer einen Betriebsmodus erkennen kann, hier beispielsweise einen Produktivmodus, in welchem das Gerät DEV zur Fertigung eines Produkts mittels der Kommunikationsschnittstelle KOM programmtechnisch angesteuert wird, einen Wartungsmodus, in welchem eine Softwareaktualisierung des Geräts DEV erfolgen kann und einen Ruhezustand, in welchem das Gerät über die Kommunikationsschnittstelle KOM nicht ansprechbar ist.

Mittels der Kommunikationsschnittstelle KOM wird das Gerät DEV bei einem IT-Sicherheitstest des Geräts DEV von einer Testplattform SIE mit einer Reihe von Fuzzing-Eingabedaten beschickt und ein Datenfeedback des Geräts DEV beobachtet. In einem sicheren Normalbetrieb gibt das Gerät DEV mittels der Kommunikationsschnittstelle KOM Bestätigungsdaten zur Entgegennahme der Eingangsdaten aus und übermittelt in regelmäßigen Zeitabständen Dokumentationsdaten zum Betrieb des Geräts DEV. Das Datenfeedback setzt sich folglich im Normalzustand des Geräts DEV aus Feedbackdaten, umfassend diese Bestätigungsdaten und Dokumentationsdaten, zusammen.

Die Testplattform SIE empfängt dieses Datenfeedback und wertet dieses Datenfeedback aus. Dabei wird das Datenfeedback mit den dem Gerät übermittelten Fuzzing-Eingabedaten in Beziehung gesetzt und Abweichungen vom vorgesehenen Normalbetrieb können mittels der Testplattform SIE auf IT-Sicherheitslücken hin überprüft werden.

Wenn die Fuzzing-Eingabedaten jedoch das Gerät DEV von Normalbetrieb in einen gestörten Gerätezustand versetzen, so stellt das Gerät DEV im gezeigten Ausführungsbeispiel seinen Datenfeedback ein. Mittels der Kommunikationsschnittstelle KOM werden folglich von der Testplattform SIE keine Feedbackdaten mehr erhalten. Das Datenfeedback ist somit durch fehlende Feedbackdaten charakterisiert.

Die Testplattform SIE weist jedoch nicht allein eine Kommunikationsschnittstelle KOM auf, sondern zusätzlich verfügt die Testplattform SIE über Erfassungsmittel in Gestalt einer Videokamera VID und eines Mikrofons MIK.

Mittels der Videokamera VID wird die Benutzerschnittstelle USE des Geräts DEV gefilmt. Wenn das Gerät DEV seinen Datenfeedback einstellt, so wird das von der Videokamera VID aufgenommene Bild der Benutzerschnittstelle USE des Geräts DEV ausgewertet. Die Benutzerschnittstelle kann ein Display aufweisen, in welchem eine Fehlermeldung in Gestalt eines Benachrichtigungsfensters eines Betriebssystems des Geräts DEV erscheint. Die Videokamera VID übermittelt das Bild des Displays mit dem Benachrichtigungsfenster mittels einer Videosignalverbindung VIDSIG an die Testplattform SIE.

Eine Klassifizierungseinrichtung CLASS der Testplattform SIE ist darauf trainiert, die Bilder des Displays mit dem Benachrichtigungsfenster auszuwerten und zu klassifizieren. So kann das Benachrichtigungsfenster eine Fehlermeldung enthalten, welche auf einen Fehlerzustand des Geräts DEV hinweist, beispielsweise eine Fehlermeldung "Gerät antwortet nicht. Weiterbetrieb erfordert Neustart". Die Klassifizierungseinrichtung CLASS der Testplattform SIE ist daraufhin trainiert, die Benachrichtigungsfenster zu erkennen und den Textinhalt zu erfassen. Dazu weist die Klassifizierungseinrichtung ein neuronales Netz auf, welches in an sich bekannter Weise ein entsprechendes Training erfahren hat.

Die Klassifizierungseinrichtung CLASS übermittelt nun die anhand der erfassten Textinhalte klassifizierten Bildsignale, d. h. eine den erfassten Bildsignalen zugeordnete Klasse, an eine Zustandsermittlungseinrichtung DET, welche den erfassten Textinhalt der Benachrichtigungsfenster einem Gerätezustand des Geräts DEV zuordnet.

Analog zu den Bildern der Videokamera nimmt das Mikrofon MIK Tonsignale der Benutzerschnittstelle USE des Geräts DEV auf. Die Benutzerschnittstelle USE des Geräts DEV gibt einen Warnton aus, wenn das Gerät DEV seinen Datenfeedback einstellt. Das Mikrofon MIK übermittelt dieses Tonsignal ebenfalls über die Videosignalverbindung VIDSIG an die Testplattform SIE. Die Klassifikationseinrichtung CLASS klassifiziert zusätzlich auch die Tonsignale und übermittelt die Klassifikation des Tonsignals, d. h. eine den erfassten Tonsignalen zugeordnete Klasse, an die Zustandsermittlungseinrichtung DET. Die Zustandsermittlungseinrichtung DET hält in einem internen Speicher eine Zuordnungsvorschrift bereit, die die klassifizierten Tonsignale und Bildsignale, also die Klassen der Tonsignale und der Bildsignale einem internen Gerätezustand des Geräts DEV zuordnet. Anhand des zugeordneten Gerätezustands wird das Datenfeedback und werden die Fuzzing-Eingabedaten analysiert. So kann beispielsweise mittels der Testplattform SIE in an sich bekannter Weise geschlossen werden, welche Fuzzing-Eingabedaten zu dem mittels der Zustandsermittlungseinrichtung DET ermittelten Gerätezustand führen und welches Datenfeedback einem solchen Gerätezustand mit ausbleibenden Feedbackdaten jeweils typischerweise unmittelbar vorangeht. Diese Testergebnisse RES, auf welche mittels der Testplattform SIE geschlossen wird, werden einer Ergebnisdatenbank DB übermittelt, welche die Testergebnisse RES speichert und dokumentiert.

Zusätzlich wird der derart ermittelte Gerätezustand herangezogen, um den Test fortzusetzen. So können die Fuzzing-Eingabedaten, welche zu dem gestörten Gerätezustand geführt haben, beispielsweise abgewandelt werden, sodass in weiteren Testläufen ein solcher gestörter Gerätezustand vermieden werden kann. In weiteren Ausführungsbeispielen können die Fuzzing-Eingabedaten auch dergestalt variiert werden, dass abstrahiert werden kann, welche Art von Fuzzing-Eingabedaten zu einem gestörten Gerätezustand führen.

Ferner kann in einem nicht eigens dargestellten Ausführungsbeispiel die Testplattform SIE mit einem Aktor in Gestalt eines Roboterfingers signalverbunden sein, welcher eine Rücksetztaste der Benutzerschnittstelle USE des Geräts DEV drücken kann. Alternativ kann in weiteren Ausführungsbeispielen die Benutzerschnittstelle einen Touchscreen aufweisen und der Aktor kann ein Rücksetzfeld des Touchscreens bedienen. In weiteren Ausführungsbeispielen kann der Aktor ein Stromkreisunterbrecher sein, welcher einen Stromkreis des Geräts DEV unterbricht und/oder ein Kurzschlusselement sein, welches einen Kurzschluss des Geräts DEV hervorruft. So kann die Testplattform SIE in solchen Fällen, in welchen ein gestörter Gerätezustand mit ausbleibenden Feedbackdaten auftritt, ein Rücksetzsignal an den Roboterfinger übergeben, welcher daraufhin die Rücksetztaste des Benutzerschnittstelle USE drückt. Somit kann das Gerät DEV neugestartet werden und der IT-Sicherheitstest kann mit der Testplattform SIE fortgesetzt werden.

## Patentansprüche

1. Verfahren zur Durchführung eines IT-Sicherheitstests eines Geräts (DEV) mittels einer Datenverbindung (KOM), insbesondere Netzwerkverbindung, bei welchem
- der IT-Sicherheitstest des Geräts (DEV) durchgeführt wird,
- bei der Durchführung des IT-Sicherheitstests ein Datenfeedback des Geräts mittels der Datenverbindung (KOM) erfasst wird,
- ein Gerätezustand des Geräts (DEV) zusätzlich optisch und/oder akustisch erfasst wird,
- das Datenfeedback unter Berücksichtigung des erfassten Gerätezustands ausgewertet wird, und bei welchem optisch und/oder akustisch mittels mindestens eines Erfassungsmittels (MIK, VID) erfasst wird und der Gerätezustand einen Fehlerzustand des Geräts bildet oder umfasst, wobei der Gerätezustand anhand einer Fehlermeldung, eines optischen Benachrichtigungssignals und/oder eines akustischen Signals, des Geräts und/oder eines Betriebssystems des Geräts und/oder einer Software des Geräts, erfasst wird,
wobei der erfasste Gerätezustand herangezogen wird, das Gerät (DEV) in Abhängigkeit des Gerätezustands zu bedienen, und bei welchem der erfasste Gerätezustand herangezogen wird, um das Gerät (DEV) in einen sicheren Betriebsmodus zu versetzten und/oder einer Softwareaktualisierung zu unterziehen und/oder außer Betrieb zu nehmen und/oder auszuschalten oder in einen Ruhezustand zu versetzen.

2. Verfahren nach dem vorhergehenden Anspruch, bei welchem das Erfassungsmittels (MIK, VID) mindestens eine Kamera (VID) und/oder mindestens ein Mikrofons (MIK) bildet und/oder wobei das optische Benachrichtigungssignal ein Benachrichtigungsfenster ist.

3. Verfahren nach einem der vorhergehenden Ansprüche, bei welchem das Datenfeedback Feedbackdaten umfasst und/oder die Information umfasst, ob Feedbackdaten erhalten werden oder ob keine oder weniger Feedbackdaten erhalten werden als erwartet.

4. Verfahren nach dem vorhergehenden Anspruch, bei welchem der erfasste Gerätezustand herangezogen wird, eine Sicherheitsinformation aus dem Datenfeedback in Abhängigkeit des Gerätezustands abzuleiten.

5. Verfahren nach einem der vorhergehenden Ansprüche, bei welchem der Gerätezustand erfasst wird, indem ein akustisches Signal des Geräts (DEV), insbesondere ein Alarmsignal des Geräts (DEV) und/oder ein optisches Signal des Geräts (DEV), insbesondere eine Anzeige des Geräts (DEV), erfasst wird.

6. System zur Durchführung eines IT-Sicherheitstests eines Geräts (DEV) zur Durchführung eines Verfahrens nach einem der vorhergehenden Ansprüche,
mit einer Kommunikationsschnittstelle (KOM) für eine Datenverbindung mit dem Gerät (DE),
mit einer Testeinrichtung zur Durchführung des IT-Sicherheitstests, welche ausgebildet ist, ein Datenfeedback des Geräts (DE) zu erfassen,
mit mindestens einem Erfassungsmittel (MIK, VID) zur optischen und/oder akustischen Erfassung des Gerätezustands, mit einer Auswerteinrichtung (DET), welche ausgebildet ist, das Datenfeedback unter Berücksichtigung des erfassten Gerätezustands auszuwerten.

7. System nach dem vorhergehenden Anspruch, welches zur Durchführung eines IT-Sicherheitstests eines Geräts (DE) mit einer graphischen und/oder akustischen Benutzerschnittstelle ausgebildet ist, wobei das mindestens eine Erfassungsmittel zur Erfassung der Benutzerschnittstelle ausgebildet ist.

8. System nach dem vorhergehenden Anspruch, bei welchem das mindestens eine Erfassungsmittel mindestens eine Kamera (VID) und/oder mindestens ein Mikrofon (MIK) aufweist.

9. System nach einem der vorhergehenden Ansprüche, aufweisend mindestens einen Aktor, ausgebildet zur Bedienung des Geräts (DE) in Abhängigkeit des Gerätezustands.

10. System nach einem der vorhergehenden Ansprüche, welches zur Durchführung eines IT-Sicherheitstests eines Geräts (DEV) mit mindestens einer Benutzerschnittstelle ausgebildet ist, wobei der Aktor eingerichtet ist, die mindestens eine Benutzerschnittstelle des Geräts (DEV) zu bedienen.

11. Fertigungsanlage und/oder Wartungsanlage und/oder Logistikanlage mit einem System nach einem der vorhergehenden Ansprüche.

## Claims

1. Method for carrying out an IT security test on a device (DEV) by means of a data connection (KOM),
in particular a network connection, in which
- the IT security test on the device (DEV) is carried out,
- a data feedback of the device is acquired by means of the data connection (KOM) as the IT security test is carried out,
- a device status of the device (DEV) is additionally optically and/or acoustically acquired,
- the data feedback is evaluated in consideration of the acquired device status, and in which the acquisition is performed optically and/or acoustically by means of at least one acquisition means (MIK, VID) and the device status forms or comprises an error status of the device, the device status being acquired on the basis of an error message, an optical notification signal and/or an acoustic signal, of the device and/or an operating system of the device and/or software of the device,
the acquired device status being used to operate the device (DEV) according to the device status, and in which the acquired device status is used to put the device (DEV) into a safe operating mode and/or to subject it to a software update and/or to take it out of operation and/or to switch it off or to put it into an idle state.

2. Method according to the preceding claim, in which the acquisition means (MIK, VID) forms at least one camera (VID) and/or at least one microphone (MIK) and/or the optical notification signal is a notification window.

3. Method according to either of the preceding claims, in which the data feedback comprises feedback data and/or the information regarding whether feedback data are received or whether no or fewer feedback data than expected are received.

4. Method according to the preceding claim, in which the acquired device status is used to derive safety information from the data feedback according to the device status.

5. Method according to one of the preceding claims, in which the device status is acquired by acquiring an acoustic signal of the device (DEV), in particular an alarm signal of the device (DEV), and/or an optical signal of the device (DEV), in particular a display on the device (DEV).

6. System for carrying out an IT security test on a device (DEV) for carrying out a method according to one of the preceding claims,
having a communication interface (KOM) for a data connection to the device (DE),
having a test unit for carrying out the IT security test, which is designed to acquire a data feedback of the device (DE),
having at least one acquisition means (MIK, VID) for the optical and/or acoustic acquisition of the device status,
having an evaluation unit (DET), which is designed to evaluate the data feedback in consideration of the acquired device status.

7. System according to the preceding claim, which is designed to carry out an IT security test on a device (DE) having a graphical and/or acoustic user interface, the at least one acquisition means being designed to acquire the user interface.

8. System according to the preceding claim, in which the at least one acquisition means has at least one camera (VID) and/or at least one microphone (MIK).

9. System according to one of the preceding claims, having at least one actuator designed to operate the device (DE) according to the device status.

10. System according to one of the preceding claims, which is designed to carry out an IT security test on a device (DEV) having at least one user interface, the actuator being configured to operate the at least one user interface of the device (DEV).

11. Manufacturing facility and/or maintenance facility and/or logistics facility having a system according to one of the preceding claims.

## Revendications

1. Procédé de réalisation d'un test de sécurité informatique d'un appareil (DEV) au moyen d'une liaison de données (KOM), plus particulièrement d'une liaison réseau, dans lequel
- le test de sécurité informatique de l'appareil (DEV) est réalisé,
- lors de la réalisation du test de sécurité informatique, un retour de données de l'appareil est enregistré au moyen de la liaison de données (KOM),
- un état du dispositif de l'appareil (DEV) est, en outre, enregistré optiquement et/ou acoustiquement,
- le retour de données est évalué en tenant compte de l'état du dispositif enregistré, et dans ce cas est enregistré optiquement et/ou acoustiquement à l'aide d'au moins un moyen d'enregistrement (MIK, VID) et l'état du dispositif forme ou comprend un état d'erreur de l'appareil, dans lequel l'état du dispositif est enregistré à l'aide d'un message d'erreur, d'un signal de notification optique et/ou d'un signal acoustique, de l'appareil et/ou d'un système de fonctionnement de l'appareil et/ou d'un logiciel de l'appareil,
dans lequel l'état du dispositif enregistré est utilisé pour faire fonctionner l'appareil (DEV) en fonction de l'état du dispositif, et dans ce cas l'état du dispositif enregistré est utilisé pour mettre l'appareil (DEV) dans un mode de fonctionnement sûr et/ou le soumettre à une mise à jour du logiciel et/ou le mettre hors service et/ou le désactiver ou le mettre dans un état de veille.

2. Procédé selon la revendication précédente, dans lequel le moyen d'enregistrement (MIK, VID) forme au moins une caméra (VID) et/ou au moins un microphone (MK) et/ou dans lequel le signal de notification optique est une fenêtre de notification.

3. Procédé selon l'une des revendications précédentes, dans lequel le retour de données comprend des données de retour et/ou comprend l'information permettant de savoir si des données de retour sont reçues ou si aucune ou moins de données de retour sont reçues comme escompté.

4. Procédé selon la revendication précédente, dans lequel l'état du dispositif enregistré est utilisé pour déduire du retour de données une information de sécurité en fonction de l'état du dispositif.

5. Procédé selon l'une des revendications précédentes, dans lequel l'état du dispositif est enregistré, tandis qu'un signal acoustique de l'appareil (DEV), plus particulièrement un signal d'alarme de l'appareil (DEV) et/ou un signal optique de l'appareil (DEV), plus particulièrement un affichage de l'appareil (DEV), est enregistré.

6. Système de réalisation d'un test de sécurité informatique d'un appareil (DEV) pour réaliser un procédé selon l'une des revendications précédentes,
comprenant une interface de communication (KOM) pour une liaison de données avec l'appareil (DE),
comprenant un dispositif de test pour réaliser le test de sécurité informatique, lequel est conçu pour enregistrer un retour de données de l'appareil (DE),
comprenant au moins un moyen d'enregistrement (MIK, VID) pour l'enregistrement optique et/ou acoustique de l'état du dispositif,
comprenant un dispositif d'évaluation (DET), lequel est conçu pour évaluer le retour de données en tenant compte de l'état du dispositif enregistré.

7. Système selon la revendication précédente, lequel est conçu pour réaliser un test de sécurité informatique d'un appareil (DE) avec une interface utilisateur graphique et/ou acoustique, dans lequel le au moins un moyen d'enregistrement est conçu pour enregistrer l'interface utilisateur.

8. Système selon la revendication précédente, dans lequel le au moins un moyen d'enregistrement présente au moins une caméra (VID) et/ou au moins un microphone (MIK).

9. Système selon l'une des revendications précédentes, présentant au moins un actionneur, conçu pour faire fonctionner l'appareil (DE) en fonction de l'état du dispositif.

10. Système selon l'une des revendications précédentes, lequel est conçu pour réaliser un test de sécurité informatique d'un appareil (DEV) avec au moins une interface utilisateur, dans lequel l'actionneur est configuré pour faire fonctionner la au moins une interface utilisateur de l'appareil (DEV).

11. Installation de production et/ou installation de maintenance et/ou installation logistique comprenant un système selon l'une des revendications précédentes.
